# EUROPEAN PATENT APPLICATION

(11) **EP 4 597 335 A1**
(43) Date of publication of application: **06.08.2025**
(21) Application number: 24382112.1
(22) Date of filing: 05.02.2024
(51) Int. Cl.: G06F 16/332, B60W 50/08, G10L 15/08

(54) **METHOD AND APPARATUS FOR LANGUAGE PROCESSING**

(71) Applicant: TomTom Global Content B.V., 1011 AC Amsterdam (NL)
(72) Inventor: Ungheretti, Massimiliano, 1011 AC Amsterdam (NL); Fernandez Diaz, Ivan, 1011 AC Amsterdam (NL)
(74) Representative: Bardehle Pagenberg Partnerschaft mbB Patentanwälte Rechtsanwälte

(57) **Abstract**

A computer-implemented method is disclosed. The method comprising receiving an input query from a user; evaluating the input query based, at least in part, on a first language model; selecting a second language model from a plurality of second language models based, at least in part, on evaluating the input query; processing the input query based, at least in part, on the second language model; and performing an operation based, at least in part, on the processing of the input query.

## Description

### INTRODUCTION

Aspects of the present disclosure generally relate to language processing, and more particularly to techniques and apparatuses for evaluating and processing of user queries.

The automotive industry is undergoing a transformation, with the integration of advanced artificial intelligence technologies, particularly language models, into vehicular systems. Traditional human-machine interfaces have been replaced by advanced systems capable of understanding and responding to natural language. However, the development of language models in cars is not merely about speech recognition. It extends to contextual understanding, intent recognition, and adaptive communication. As vehicles evolve into intelligent entities, the incorporation of language models becomes crucial for enhancing user experience, safety, and overall vehicular performance. From infotainment systems to voice-activated controls, the role of language models is becoming increasingly important in shaping the next generation of smart automobiles. Moreover, language models play a crucial role in enhancing vehicular safety. Advanced driver-assistance systems benefit from language models' ability to interpret and respond to verbal commands, allowing drivers to focus on the road while maintaining control over various in-car functionalities. This fusion of language models with safety-critical systems marks a paradigm shift towards a more user-friendly and secure driving experience.

The first language models were developed to computationally emulate human language. These language models consisted only of relatively few parameters and were mostly rule-based and statistical models. Despite the relatively low capabilities of these models, they paved the way for subsequent breakthroughs in machine learning, e.g., for Recurrent Neural Networks and Long Short-Term Memory architectures. Furthermore, the introduction of the Transformer architecture marked a turning point in the development of language modeling and caused a paradigm shift toward attention mechanisms and parallelized computation. The core of modern language models consists of transfer learning and pre-training methodologies. Transfer learning refers to pre-training the language model on extensive datasets before fine-tuning the language model for specific tasks. The capability to extract abstract linguistic features during pre-training empowers language models to adapt to diverse downstream applications. The capabilities of large language models, exemplified by models such as GPT-3 with 175 billion parameters, extends beyond their sheer size. These models have proven to be versatile tools and are capable of tasks ranging from language translation and sentiment analysis to code generation and summarization. Their ability to generalize knowledge from pre-training data and adapt to various tasks with minimal task-specific training data has democratized access to advanced language processing capabilities.

The transformation of the automotive industry as mentioned above has been accelerated by these breakthroughs in natural language processing and machine learning. However, the growth in model size is a dual-edged sword. On one side, it enables language models to capture and generate sophisticated linguistic structures, contributing to their remarkable linguistic capabilities. On the other side, the large model size demands a large amount of computational power, memory, and resources, posing substantial challenges in terms of scalability and energy consumption. Current cars may not possess the processing power and the memory required for operating these large-scale language models. The incompatibility between the computational demands of state-of-the-art large language models and the limitations of automotive computing infrastructure poses a substantial hurdle in realizing the integration of such advanced linguistic architectures within vehicular contexts.

### SUMMARY

Current language models are only capable of accurately processing complex queries if they are large. However, processing complex queries using large language models requires considerable time. Furthermore, to execute large language models, large amounts of computational power, memory, and/or other resources are required. To overcome this drawback, the objective of the invention is to reduce the required processing time, the required computational power, the required memory, and/or other required resources for executing large language models while maintaining their capabilities of accurately processing complex queries.

In some aspects of the present disclosure, a computer-implemented method is disclosed, the method comprising receiving an input query from a user; evaluating the input query based, at least in part, on a first language model; selecting a second language model from a plurality of second language models based, at least in part, on evaluating the input query; processing the input query based, at least in part, on the second language model; performing an operation based, at least in part, on the processing of the input query.

In some aspects of the present disclosure, evaluating the input query comprises selecting one or more applications from a plurality of applications, wherein the plurality of applications includes at least one vehicle-related application and/or at least one navigation-related application.

In some aspects of the present disclosure, the plurality of applications comprises one or more of: a routing application, a search application, electrical vehicle (EV) charger search application, a traffic application, a vehicle control application, a weather application, a web search application, a general knowledge application, a feedback application, a car manual application, and a Heating, Ventilation, and Air Conditioning (HVAC) control application.

In some aspects of the present disclosure, performing the operation is performed using, at least in part, the one or more applications.

Using the one or more applications that were selected as part of the evaluation of the input query allows to reduce the processing time of the second language model.

In some aspects of the present disclosure, using the application further comprises transmitting a second input query to a first server; and receiving a processed second input query from the first server.

This feature offers the advantage that the computer that is performing the method does not have to run the application itself. Thus, required computational power, required memory, and/or other required resources may be reduced. Additionally, this feature may reduce the processing time.

In some aspects of the present disclosure, evaluating the input query comprises a complexity evaluation of the input query. Furthermore, selecting the second language model is based on the complexity evaluation of the input query.

This feature allows to choose an appropriate second language model for processing a given input query. Therefore, the processing time and/or the required resources to execute the second language model can be decreased.

In some aspects of the present disclosure, the second plurality of language models comprises models of different complexity. In addition, selecting the second language model is based on the complexity of the second language model.

In some aspects of the present disclosure, processing the input query comprises transmitting the input query to a second server and receiving a processed input query from the second server.

This feature enables the computer that is running the method to obtain a processed input query without executing the second language model. It follows that the required computational power, required memory, and/or other required resources can be reduced.

In some aspects of the present disclosure, the method further comprising controlling at least a part of a machine in response to the input query.

In some aspects of the present disclosure, the machine is a vehicle and controlling the machine preferably comprises one or more of: turning a wiper on or off, adjusting the ventilation, adjusting the heating, closing or opening a window, controlling one or more vehicle lights, adjusting the position of a mirror, and closing or opening a sunroof.

In some aspects of the disclosure, evaluating the input query comprises translation from a first language to a second language.

This feature allows for processing the input query in the second language. Therefore, linguistic consistency can be maintained and user experience can be enhanced without increasing the computational power and the required memory of the computer that is performing the method.

In some aspects of the disclosure, evaluating the input query is based on previous communication and/or the plurality of the applications.

In some aspects of the disclosure, the first language model differs from each of the plurality of second language models by: a number of parameters of the model, a dimension of the input of the model, an average number of bitwise operations for processing one input query, an average number of CPU cycles for processing one input query, and/or a number of samples used for training the model.

This feature allows for a reduced processing time of an input query as an appropriate second language model can be selected based on the evaluation by the first language model.

In some aspects of the disclosure, evaluating the input query comprises determining that at least one selected application is not available. Alternatively, the input query comprises determining that at least one selected application is not available.

In some aspects of the present disclosure, a system is disclosed, the system comprising at least one processing unit configured to perform the method according to above.

In some aspects of the present disclosure, a car is disclosed, the car comprising or forming part of the system above and further comprising: an input system configured to obtain a user input corresponding to an input query; and at least one element controllable by the system in response to an input query.

The foregoing has outlined rather broadly features of examples according to the present disclosure. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited aspects of the present disclosure can be understood in detail, in the following, a more particular description is provided by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.

In FIG. 1, a process flow in accordance with various aspects of the present disclosure is shown.

In FIG. 2, an apparatus in accordance with various aspects of the present disclosure is shown.

In FIG. 3, exemplary applications in accordance with various aspects of the present disclosure are shown.

### DETAILED DESCRIPTION

Various aspects of the present disclosure are described in more detail hereinafter with reference to the accompanying drawings.

This disclosure may, however, be implemented in many different forms and should not be construed as limited to any specific structure or function presented throughout this disclosure. Rather, these aspects are provided so that this disclosure will be thorough and complete, and will fully convey the scope of the present disclosure to those skilled in the art. Based on the teachings herein one skilled in the art should appreciate that the scope of the present disclosure is intended to cover any aspect of the present disclosure disclosed herein, whether implemented independently of or combined with any other aspect of the present disclosure. For example, an apparatus may be implemented or a method may be practiced using any number of the aspects set forth herein. In addition, the scope of the present disclosure is intended to cover such an apparatus or method which is practiced using other structure, functionality, or structure and functionality in addition to or other than the various aspects of the present disclosure set forth herein. It should be understood that any aspect of the present disclosure disclosed herein may be implemented by one or more elements of a claim. While specific feature combinations are described in the following with respect to certain aspects of the present disclosure, it is to be understood that not all features of the discussed examples must be present for realizing the technical advantages of the devices, systems, methods and computer programs disclosed herein. Disclosed aspects may be modified by combining certain features of one aspect with one or more features of other aspects. A skilled person will understand that features, steps, components and / or functional elements of one aspect can be combined with compatible features, steps, components and / or functional elements of any other aspect of the present disclosure.

In the following embodiments of the invention, language models are defined by their input, that is, their input is associated to language signals. For instance, a language signal may be a text, and the input of the language model may be an array of integers and/or floating point numbers, wherein there is a mapping from the text to the array of integers and/or floating point numbers. The output of a language model can be arbitrary. For instance, the output may be a single bit, an array of bits, a single integer, an array of integers, a floating point number, or an array of floating point numbers. In this way, a language model can be used for different tasks. For instance, a language model may be used for classification of the input. Additionally or alternatively, a language model may be used for producing an array of integers and/or floating point numbers. Additionally, the array of integers and/or floating point numbers may be mapped to a text, and the text may be used as response to the input. Additionally, the text may be converted to a speech and/or an audio signal and the speech and/or the audio signal can be used as response to the input. Furthermore, large language models may be language models with one billion or more parameters, e.g., GPT-3, GPT-4, LLaMA, and LLaMA-2. Additionally, a large language model may be based on the transformer architecture to understand and generate accurate responses to input queries.

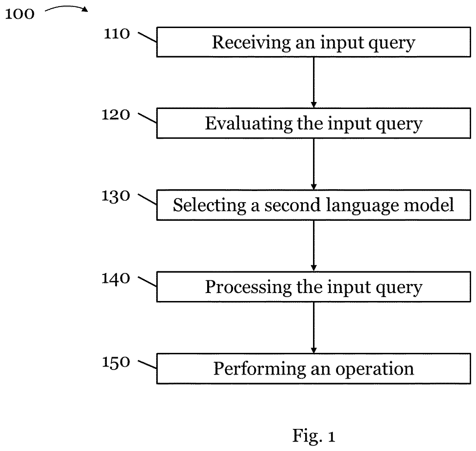

In FIG. 1, a process flow 100 of a preferred embodiment of the invention is shown. The steps of the process flow may be executed by a computer. Additionally, the computer may be comprised in a machine. For instance, the machine may be a vehicle such as a car, a truck, a motorbike, a bicycle, or a plane.

In step 110 of the process flow 100, an input query is received from a user. For instance, the user may be a person that is operating the machine, e.g., the driver of the car, of the truck, of the motorbike, or of the bicycle. Alternatively, the user may be a pilot of the plane.

The input query may be a text. The text may be obtained from the user entering the text via a keyboard or a touchpad. Alternatively, the text may be obtained by converting a speech of the user to the text using a speech recognition algorithm. If the input query is provided as a speech input, step 110 may be the conversion of the speech to a digital signal that allows for further processing. The conversion of speech, sometimes also referred to as speech recognition, may be performed according to well-know techniques.

Irrespective of the way the input query is provided by the user, the input query may comprise a question and/or an instruction. For instance, the input query may comprise a question about the weather and/or an instruction to control the machine. In one example, the input query may comprise to start and/or to stop an engine of the machine. If the machine is a vehicle, the input query may comprise an instruction to turn on and/or turn off a light of the vehicle. Furthermore, if the machine is a car, the input query may comprise the instruction to turn on and/or to turn off a wiper of the car. The input query may also comprise a plurality of questions and/or instructions. For instance, if the machine is a car, the input query may comprise "Route me to Paris, turn on the wipers, and provide the weather forecast there".

The input query may be in English, Dutch, Spanish, French, German, or any other language. Alternatively, the input query may be comprised of multiple parts, where each part is in a different language. Allowing a user to provide the input query in any of a number of languages lowers the burden of using the system for the user. The user can use the language he or she feels most comfortable with, and also dispenses with the need of first configuring the system according to the user's choice.

In step 120 of the process flow 100, the input query from the user is evaluated. The evaluation is based, at least in part, on a first language model.

The first language model may be a large language model that is smaller than a second language model, and thus also called a "smaller" language model. In particular, the first language model may have a smaller number of parameters, e.g., less than one billion parameters. Additionally or alternatively, the first language model may have a short average response time and/or a short 50th percentile response time and/or a short 90th percentile response time and/or a short 95th percentile response time and/or a short 99th percentile response time. For instance, the 50th percentile response time may be less than one second.. Additionally or alternatively, the first language model may directly perform a simple task. In a preferred embodiment, the first language model may perform a classification of the input query. For instance, the first language model may perform at least one binary classification and/or at least one multi-class classification and/or at least one multi-label classification. In particular, the first language model may be trained for evaluating the input query.

Evaluating the input query may comprise executing the first language model. In a preferred embodiment, evaluating the input query may comprise executing the first language model by the same computer that is running the process-flow 100. Alternatively, the first language model may be executed by the machine that comprises the computer that that is running the process-flow 100. For instance, the machine may comprise a second computer, wherein the first language model may be executed by the second computer.

Evaluating the input query may comprise selecting at least one application from a plurality of applications. Preferably, the selected at least one application comprise at least one application for processing/responding to at least part of the input query. Alternatively, evaluating the input query may comprise filtering what integrations are necessary to perform a desired action. In a preferred embodiment, the plurality of applications may comprise at least one application for controlling a machine and/or a vehicle and/or a car and/or a motorbike and/or a bicycle and/or a plane. For instance, the plurality of applications may comprise an application for turning on/off a light, for turning on/off a wiper, and/or for opening/closing a sunroof. Additionally or alternatively, the plurality of applications may comprise one or more of: a routing application, a location search application, an electrical vehicle (EV) charger search application, a traffic application, a vehicle control application, a weather application, a web search application, a general knowledge application, a feedback application, a car manual application, and a Heating, Ventilation, and Air Conditioning (HVAC) control application. The selection of the application may facilitate the further processing of the input query. For example, an input query from a user like "Route me to Paris" may not be fully evaluated by the first language model, which, as mentioned above, is preferably a smaller language model. Even if the first language model had sufficient capabilities to fully evaluate the input query, it is advantageous to not prompt the first language model to do so, since this saves computational resources. However, the first language model may provide sufficient certainty that the input query requires access to location data (e.g., GPS data) and/or requires a routing application, so that the query is further processed with use of the appropriate resources.

Evaluating the input query may comprise determining that at least one selected application is not available. In this case, feedback may be given to the user about the unavailability. For example, if the input query comprises an instruction to call someone, the evaluation may select a phone application. Should a phone not be available, the method may comprise returning output indicating the unavailability, and further steps of the method may be omitted. Additionally or alternately, in such a case, processing the input query based, at least in part, on the second language model may comprise providing a response indicating the input query cannot (or at least cannot fully) be processed.

Evaluating the input query may comprise analyzing a complexity of the input query. For instance, analyzing the complexity of the input query may be based, at least in part, on a number of the at least one application selected from a plurality of applications. Additionally or alternatively, evaluating the input query may comprise determining a class of the input query. For instance, the class may be a complexity class. In this case, determining the class of the input query may be based, at least in part, on a number of the at least one application selected from a plurality of applications.

Evaluating the input query may also comprise classifying the input query. In particular, classifying the input query may be based, at least in part, on a number of the at least one application selected from a plurality of applications. For instance, the input query may be classified as simple if a single application is selected and complex if at least two applications are selected. Alternatively, the input query may be classified as simple if a single application is selected, medium if at least two and at most three applications are selected, and complex if more than three applications are selected. In a preferred embodiment, evaluating the input query may comprise at least one binary classification and/or at least one multi-class classification and/or at least one multi-label classification. Additionally, the at least one binary classification and/or the at least one multi-class classification and/or the at least one multi-label classification may be based, at least in part, on a number of the at least one application selected from a plurality of applications.

Evaluating the input query may depend, at least in part, on a context. In particular, evaluating the input query may depend, at least in part, on a location and/or a previous input query and/or a previous conversation and/or a type of a car and/or a specification of a car and/or a battery state of a car.

Evaluating the input query may comprise translating of the input query from a first language to a second language. For instance, the second language may be English and the first language may be any other language than English. In case such a translation is part of the process - which is the case if the user is allowed to provide the input query via any of a number of selected languages - this translation may take place prior to the afore-mentioned evaluation operations, e.g., prior to the selection of the applications or the analysis of the complexity.

In step 130 of the process flow 100, a second language model is selected from a plurality of second language models based, at least in part, on evaluating the input query.

The plurality of second language models may comprise models of different complexity. More particularly, the plurality of second language models may comprise second language models with different numbers of parameters. The plurality of second language models may comprise smaller language models and/or large language models. In a preferred embodiment, the plurality of second language models may comprise PaLM and/or BERT and/or XLNet and/or GPT and/or LLaMA.

In a preferred embodiment, the plurality of second language models comprises at least one or more second language models with a small number of parameters and one or more second language models with a large number of parameters. For instance, the plurality of second language models comprises at least one or more second language models with less than 1 billion parameters and one or more second language models with a at least 1 billion parameters. Providing the plurality of second language models as models with varying amount of parameters allows for a more targeted selection of the most suitable language for a query. Simpler queries may be forwarded to a second language model with a small number of parameters, whereas more complex queries may be forwarded to a second language model with a larger number of parameters. This saves computing resources for processing the simple queries, since language models with a small number of parameters require less computing resources, and thus frees resources for processing complex queries with language models with a large number of parameters.

In particular, the plurality of second language models may comprise models of different average response times and/or different 50th percentile response times and/or different 90th percentile response times and/or different 95th percentile response times and/or different 99th percentile response times. For the at least one second language model with a small number of parameters, response times may be short, and/or a 50th percentile response time may be less than one second.

For the at least one second language model with a large number of parameters, response times may be long, in particular a 50th percentile response time may be more than five seconds.

The plurality of second language models may comprise at least one second language model that performs a simple task. For instance, the plurality of second language models may comprise at least one second language model that performs a classification. In particular, the plurality of second language models may comprise at least one second language model that is able to perform a binary classification and/or a multi-class classification and/or multi-label classification. Additionally or alternatively, the plurality of second language models may comprise at least one second language model that is able to perform a complex task. In a preferred embodiment, the plurality of second language models may comprise at least one second language model that is configured to output an array of integers and/or floating point numbers. Furthermore, the output of at least one second language model of the plurality of second language models may be mapped to a text. Additionally, the text can be used as an answer to the input query.

The plurality of second language models may comprise at least one second language model that is trained for processing the input query and/or at least one second language model that is not trained for processing the input query.

In a preferred embodiment, the plurality of second language models may comprise at least one second language model that is not executed as part of processing the input query. Additionally, the plurality of second language models may comprise at least one second language model that is executed as part of processing the input query.

The selection of the second language model from the plurality of second language models may be based on a complexity of the input query, wherein the complexity was determined by evaluating the input query. The selection of the second language model may be based on a class of the input query, wherein the class was determined by evaluating the input query. Additionally or alternatively, the selection of the second language model may be based on classifying the input query, wherein classifying was performed as part of evaluating the input query.

A general idea of the present disclosure is that the selection of the second language model may be based on a suitability of the second language model. Typically, the selection of the second language model from the plurality of second language models may be based on the complexity of the second language model. For example, the selection of the second language model from the plurality of second language models may be based on the average response time of the second language model and/or the 50th percentile response time of the second language model and/or the 90th percentile response time of the second language model and/or the 95th percentile response time of the second language model and/or the 99th percentile response time of the second language model. Furthermore, the selection of the second language model may be based on the expected quality of an operation. For instance, the quality of an operation may be how accurately questions in input queries are answered and/or how accurately applications are used in response to input queries. Additionally or alternatively, the selection of the second language model may be based on the second model performing simple tasks or on the second model performing complex tasks. In particular, the selection of the second language model may be based on the second language model performing binary classification, multi-class classification, and/or multi-label classification. Additionally, the selection of the second language model may be based, at least in part, on the second language model being trained for processing the input query and/or being not trained for processing the input query. Additionally, the selection of the second language model may be based, at least in part, on the second language model being executed as part of processing the input query and/or being not executed as part of processing the input query.

In a preferred embodiment, steps 110, 120, and 130 may be performed locally. For instance, the steps 110, 120, and 130 are performed by the computer that runs the process flow 100 and/or by second computer comprised in the same machine as the computer that runs the process flow 100. Alternatively, the steps 110, 120, and 130 may predominantly be performed locally, that is, only a small amount of computing resources of external servers and/or clouds may be required.

In a preferred embodiment, a context used for evaluating the input query may be different from a context used for processing the input query. In particular, a context may comprise one or more of: a location, a previous input query, a previous conversation, a type of a car, a specification of a car, and a battery state of a car.

In a preferred embodiment, the plurality of second language models may comprise the first language model. In other words, a language model that is used for evaluating the input query may be comprised in the plurality of second language models. Therefore, the second language model may be equal to the first language model. Additionally, a context used for evaluating the input query based on a language model may be different from a context used for processing the input query based on the language model.

In step 140 of the process flow 100, the input query is processed based, at least in part, on the selected second language model.

Furthermore, processing the input query may be based, at least in part, on the at least one application.

In a preferred embodiment, processing the input query may comprise transmitting the input query to a first server and/or a cloud and receiving a processed input query from the first server and/or the cloud. For instance, the first server and/or the cloud may execute the second language model to process the input query and transmit the processed input query back to the computer running the process flow 100. Alternatively, processing the input query may comprise executing the second language model. For instance, the second language model may be executed by the same computer that is running the process flow 100. Alternatively, the second language model may be executed by a machine that comprises the computer that is running the process flow 100. For instance, the machine may be a vehicle that comprises a second computer, wherein the second language model may be executed on the second computer.

In a preferred embodiment, based on selecting the second language model, processing the input query may comprise either transmitting the input query to a first server and/or a cloud and receiving a processed input query from the first server and/or the cloud; or executing the second language model (e.g., by the same computer that is running the process flow 100). Alternatively, based on selecting the second language model, processing the input query may comprise either transmitting the input query to a first server and/or a cloud and receiving a processed input query from the first server and/or the cloud; or the second language model may be executed by a machine that comprises the computer that is running the process flow 100. For instance, the machine may comprise a second computer, wherein the second language model may be executed by the second computer.

In particular, the plurality of second language models may comprise a first subset of second language models and a second subset of second language models; wherein, if the second language model is an element of the first subset of second language models, then processing the input query may comprise executing the second language model locally, e.g., on the computing resources of the machine (e.g., vehicle, car, etc.); and wherein, if the second language model is an element of the second subset of second language models, then processing the input query may comprise transmitting the input query to a first server and receiving a processed input query from the first server.

In a preferred embodiment, processing the input query may comprise determining that at least one selected application is not available. In this case, feedback may be given to the user about the unavailability. For example, if the input query comprises an instruction to call someone, the evaluation may select a phone application. Should a phone not be available, the method may comprise returning output indicating the unavailability, and further steps of the method may be omitted. Additionally or alternately, in such a case, processing the input query based, at least in part, on the second language model may comprise providing a response indicating the input query cannot (or at least cannot fully) be processed.

In a preferred embodiment, processing the input query based, at least in part, on the at least one application may comprise transmitting a second input query to a second server and receiving a processed second input query from the second server or may comprise executing the application. In particular, the second server may be equal to a first server that is used to process the input query. Alternatively, the plurality of applications may comprise a first subset of applications and a second subset of applications; wherein, if the application is an element the first subset of applications, then processing the input query may comprise executing the application locally, e.g., on the computing resources of the machine (e.g., vehicle, car, etc.); and wherein, if the application is an element of the second subset of applications, then processing the input query may comprise transmitting a second input query to a second server and receiving a processed second input query from the second server. In particular, the second server may be equal to a first server that is used to process the input query. For instance, the plurality of applications comprises one or more of: a routing application, a location search application, an electrical vehicle (EV) charger search application, a traffic application, a vehicle control application, a weather application, a web search application, a general knowledge application, a feedback application, a car manual application, and a Heating, Ventilation, and Air Conditioning (HVAC) control application.

Thus, the selection of an application in the course of step 120 provides for more resource efficiency. Tests of the applicant have proven this enhanced resource efficiency: For example, in the tests, two systems have been tested with typical queries. The first system, as known in the art, comprised a single large language model that performed the full evaluation and processing of the equerry. The second system was designed in accordance with the present disclosure and contained an approach where the evaluation and processing was split between two large language models (as described herein). The tests showed the following results:

| | First system | Second system |
|---|---|---|
| 50th percentile response time | 6929 ms | 2504 ms |
| Average response time | 7725 ms | 3491 ms |
| Command accuracy | 0.9141 | 0.9133 |
| Application accuracy | 0.9375 | 0.9384 |
| Accuracy | 0.8906 | 0.8800 |
| Number of examples | 128 | 150 |

In step 150 of the process flow 100, an operation is performed based, at least in part, on the processing of the input.

The operation may comprise returning an output response to the user. In particular, the operation may comprise outputting a text or a speech to the user. For instance, the speech may be obtained by a text-to-speech application. Furthermore, the operation may comprise translating a text and/or a speech from a second language to a first language, and the text and/or the speech may be outputted to the user in the first language. For instance, the second language may be English, and the first language may be any other language than English. While many language models can process inputs in a variety of languages, by translating the input query at step 120, the second language models can include language models optimized for a default language, such as English.

Additionally or alternatively, the operation may comprise controlling a machine. For instance, the machine may comprise the computer that is running the process flow 100. In particular, the machine may be a vehicle, and controlling the vehicle may be starting an engine of the vehicle and/or stopping an engine of the vehicle and/or turning on a wiper and/or turning off a wiper and/or opening a sunroof and/or closing a sunroof and/or turning on a light and/or turning off a light and/or make a phone call and/or starting a routing application and/or stopping a routing application and/or controlling air conditioning and/or controlling of an infotainment system.

In a preferred embodiment, performing the operation may be performed using, at least in part, the at least one application.

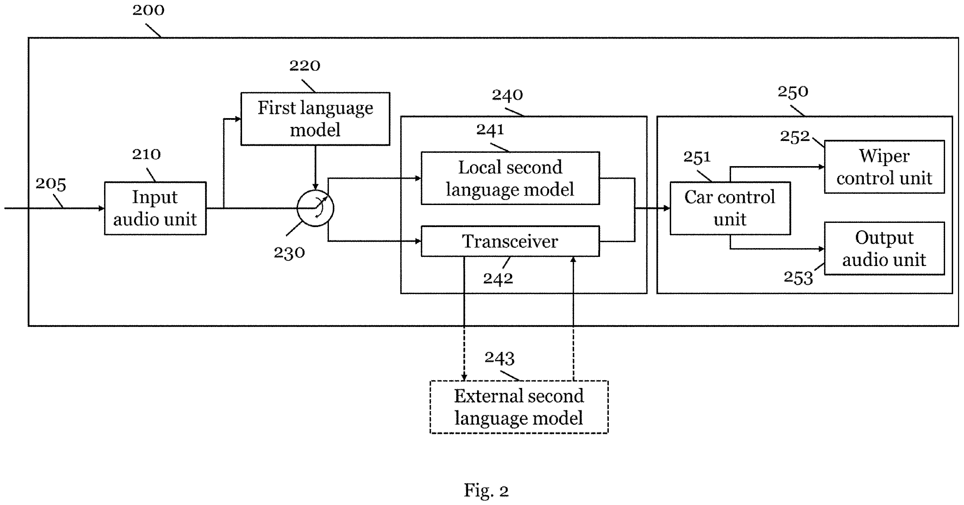

In FIG. 2, an apparatus 200 according to the invention is shown, which may be comprised in a car. The apparatus 200 comprises an input audio unit 210, a first language model 220, a selection unit 230, a processing unit 240, and an operation unit 250.

The input audio unit 210 receives an input query 205 from a user. The user may be the driver of the car, and the input query may be received in form of an analog speech signal. The output of the input audio unit 210 is the input query in form of text. For that, the input audio unit 210 may comprise an analog-to-digital converter and a speech-to-text converter. The output of the input audio unit 210 is an input of the first language model 220 and the selection unit 230.

To illustrate the function of the remaining units of the apparatus 200, two example input queries are considered in the following. A first example input query is "Turn on the wiper!". A second example input query is "Route me to Paris, turn on the wiper, and provide the weather forecast there!".

The first language model 220 receives the input query 205 in form of text from the input audio unit 210. It outputs a complexity class of the input query 205 and one or more applications.

To determine the output, the first language model 220 evaluates the input query 205. Based on the evaluation of the input query 205, the first language model 220 selects one or more applications from a plurality of applications. The plurality of applications may comprise a routing application, a location search application, an electrical vehicle charger search application, a traffic application, a vehicle control application, a weather application, a web search application, a general knowledge application, a feedback application, a car manual application, and a Heating, Ventilation, and Air Conditioning (HVAC) control application. Furthermore, based on the evaluation of the input query 205 and the selection of the one ore more applications, the first language model 220 determines the complexity class of the input query 205. For instance, there may be two complexity classes referred to as "simple" and "complex". If the first language model 220 selects at most two applications for the input query 205, then the input query 205 is assigned to the complexity class "simple". Whereas if the first language models 220 selects more than two applications for the input query 205, then the input query 205 is assigned to the complexity class "complex".

The first language model 220 is a small language model and may have a small number of parameters and a short 95th percentile response time. Furthermore, the first language model 220 may be executed locally, e.g., in the car. The first language model 220 could have been trained, at least partially, for determining the complexity class of the input query 205 and for selecting the one or more applications on a relatively small data set.

For the first example input query "Turn on the wiper!", the first language model 220 may select the application "vehicle control application". Since only one application is selected, the first example input query may be classified as "simple". For the second example input query "Route me to Paris, turn on the wiper, and provide the weather forecast there!", the first language model 220 may select the applications "routing application", "vehicle control application", and "weather application". Since three applications are selected, the second example input query may be classified as "complex".

The selection unit 230 receives the input query 205 in form of text from the input audio unit 210. Furthermore, the selection unit 230 receives the complexity class of the input query 205 and one or more applications from the first language model 220. The selection unit 230 outputs the input query 205 in form of text and the one or more applications via an output port.

The selection unit 230 selects a second language model from a plurality of second language models based on the complexity class of the input query 205. The plurality of second language models comprises a local second language model 241 and an external second language model 243. If the complexity class of the input query 205 is "simple", then the selection unit 230 selects the local second language model 241. According to this selection, the selection unit 230 transmits its output (i.e., the input query 205 in form of text and the one or more applications) to the local second language model 241 via a first output port. Whereas if the complexity class of the input query 205 is "complex", then the selection unit 230 selects the external second language model 243 and thus transmits its output (i.e., the input query 205 in form of text and the one or more applications) to the transceiver 242 via a second output port.

The first example input query "Turn on the wiper!" is classified as "simple" by the first language model 220. Therefore, the selection unit 230 selects the local language model 241 for processing the first example input query. Accordingly, the selection unit 230 transmits the first example input query in form of text and the application "vehicle control application" to the local second language model 241 via the first output port. The second example input query "Route me to Paris, turn on the wiper, and provide the weather forecast there!" is classified as "complex" by the first language model 220. It follows that the selection unit 230 selects the external language model 243 for processing the second example input query. Accordingly, the selection unit 230 transmits the second example input query in form of text and the applications "routing application", "vehicle control application", and "weather application" to the transceiver 242 via the second output port.

The processing unit 240 receives the input query in form of text and the one or more applications from the selection unit 230 at an input port. The processing unit 240 outputs a processed input query in form of text to the operation unit 250.

The processing unit 240 comprises two input ports. A first input port is connected to the local second language model 241, and a second input port is connected to the transceiver 242. If the processing unit 240 receives its input (i.e., the input query in form of text and the applications) at the first input port, then the processing unit 240 executes the local second language model 241 to processes the input query using the one or more applications. Whereas if the input is received at the second input port, then the processing unit 240 transmits its input to the external second language model 243 using the transceiver 242. For instance, the external second language model 243 may be located at an external server and may be executed by the external server. The external second language model 243 processes the input query using the one or more applications and transmits back the processed input query to the processing unit 240. The processing unit 240 receives the processed input query using the transceiver 243 and outputs the processed input query to the operation unit 250.

The local second language model 241 may be a large language model and may have a medium number of parameters and a medium 95th percentile response time. For instance, the local second language model 241 may be LLaMa-27B. The external second language model 243 may be a large language model and may have a large number of parameters and a long 95th percentile response time. For instance, the external second language model may be GPT-4. Both the local second language model 241 and the external second language model 243 may be larger than the first language model 220 and may have more parameters and a longer 95th percentile response time than the first language model 220. Furthermore, the external second language model 243 may be larger and may have more parameters and a longer 95th percentile response time than the local second language model 241.

In case of the first example input query "Turn on the wiper!", the processing unit 240 receives its input at the first input port connected to the local second language model 241. The local second language model 241 processes the first example input query using the application "vehicle control application". Then, the processing unit 240 outputs a processed first example input query to the operation unit 250. In case of the second example input query "Route me to Paris, turn on the wiper, and provide the weather forecast there!", the processing unit 240 receives its input at the second input port connected to the transceiver 242. The processing unit 240 transmits the second example input query and the applications "routing application", "vehicle control application", and "weather application" to the external second language model 243 using the transceiver 242. The external second language model 243 processes the second example input query using the applications "routing application", "vehicle control application", and "weather application". Then, the external second language model 243 transmits a processed second example input query back to the processing unit 240. The processing unit 240 receives the processed second example input query using the transceiver 242 and outputs the processed second example input query to the operation unit 250.

The operation unit 250 receives the processed input query in form of text from the processing unit 240 and performs an operation according to the processed input query.

The operation unit 250 comprises a car control unit 251, a wiper control unit 252, and an output audio unit 253. The car control unit 251 receives the processed input query and instructs certain units to perform an operation based on the processed input query. For instance, the car control unit 251 may instruct the wiper control unit 252 to turn on a wiper. Additionally or alternatively, the car control unit 251 may instruct the output audio unit 253 to convert a part of the processed input query to a response speech signal and to play back the response speech signal to the user.

In case of the first example input query "Turn on the wiper!", the operating unit 250 may only instruct the wiper control unit 252 to turn on a wiper. In case of the second example input query "Route me to Paris, turn on the wiper, and provide the weather forecast there!", the operating unit 250 may instruct the wiper control unit 252 to turn on the wiper. Additionally, the operating unit 250 may instruct the output audio unit 253 to play back the weather in Paris to the user and to route the user to Paris.

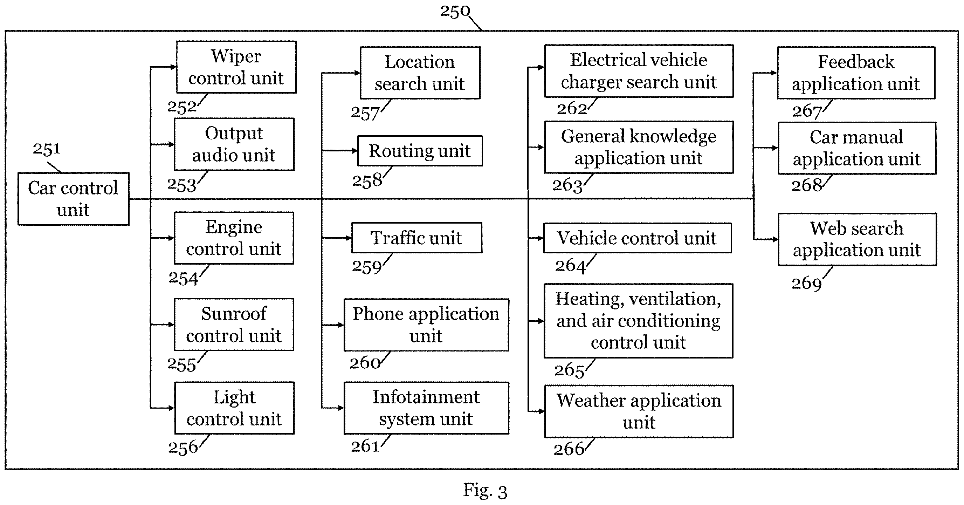

In FIG. 3, the operation unit 250 comprising the car control unit 251, the wiper control unit 252, and the output audio unit 253 is shown in more detail.

The operation unit 250 further comprises an engine control unit 254, e.g., to start and to stop the engine of the car. Additionally, the operation unit 250 comprises a sunroof control unit 255, which can open and close the sunroof of the car. Moreover, the operation unit 250 comprises a light control unit 256 to control a headlight of the car, e.g., to turn on or to turn off the headlight. The operation unit 250 further comprises a location search unit 257, which, for instance, returns the location of a restaurant, a gas station, or a medical doctor. Furthermore, the operation unit 250 comprises a routing unit 258, which returns a route from a current location to a target location. Additionally, the operation unit 250 comprises a traffic unit 259, which may return information about a traffic situation along a route. The operation unit 250 further comprises a phone application unit 260 to set up phone calls and an infotainment system unit 261 to control the infotainment system, e.g., to increase or decrease the volume of the loudspeakers. The electrical vehicle (EV) charger search unit 262 comprised in the operation unit 250 returns, for instance, locations of EV chargers in the vicinity of a current location or a specified location. The operation unit 250 further comprises a general knowledge application unit 263, which returns answers to general knowledge questions like "Where is the Eifel tower located?" or "At what temperature does water freeze?". Moreover, the operation unit 250 comprises a vehicle control unit 264 to control the vehicle, e.g., to open the trunk of the car. Additionally, the operation unit 250 comprises a heating, ventilation, and air conditioning control unit 265, e.g., to adjust the temperature in a driver's compartment of a car. The operation unit 250 further comprises a weather application unit 266, which, for instance, returns a forecast of the weather at the current location or returns the weather at a specified location. Moreover, the operation unit 250 comprises a feedback application unit 267, which, for instance, returns feedback about a style of driving the car. Additionally, the car manual application unit 268 comprised in the car returns information about how to operate the car. E.g., it returns information on a recommended air pressure in a car tire or how to open a hood of the car. The operation unit 250 further comprises a web search application unit 269 to conduct web searches, e.g., to retrieve information from websites of restaurants.

## Claims

1. A computer-implemented method comprising:
receiving an input query from a user;
evaluating the input query based, at least in part, on a first language model;
selecting a second language model from a plurality of second language models based, at least in part, on evaluating the input query;
processing the input query based, at least in part, on the second language model;
performing an operation based, at least in part, on the processing of the input query.

2. The computer-implemented method according to claim 1, wherein evaluating the input query comprises selecting one or more applications from a plurality of applications, wherein the plurality of applications includes at least one vehicle-related application and/or at least one navigation-related application.

3. The computer-implemented method according to claim 2, wherein the plurality of applications comprises one or more of: a routing application, a search application, electrical vehicle (EV) charger search application, a traffic application, a vehicle control application, a weather application, a web search application, a general knowledge application, a feedback application, a car manual application, and a Heating, Ventilation, and Air Conditioning (HVAC) control application.

4. The computer-implemented method according to claim 2 or 3, wherein performing the operation is performed using, at least in part, the one or more applications.

5. The computer-implemented method of claim 4, wherein using the application further comprises:
transmitting a second input query to a first server; and
receiving a processed second input query from the first server.

6. The computer-implemented method according to any of the previous claims,
wherein evaluating the input query comprises a complexity evaluation of the input query; and
wherein selecting the second language model is based on the complexity evaluation of the input query.

7. The computer-implemented method according to any of the previous claims,
wherein the second plurality of language models comprises models of different complexity; and
selecting the second language model is based on the complexity of the second language model.

8. The computer-implemented method according to any of the previous claims, wherein processing the input query comprises:
transmitting the input query to a second server;
receiving a processed input query from the second server; and
controlling at least a part of a machine in response to the input query.

9. The computer-implemented method according to claim 8, wherein the machine is a vehicle and controlling the machine preferably comprises one or more of: turning a wiper on or off, adjusting the ventilation, adjusting the heating, closing or opening a window, controlling one or more vehicle lights, adjusting the position of a mirror, and closing or opening a sunroof.

10. The computer-implemented method according to any of claims 1 to 9,
wherein evaluating the input query comprises translation from a first language to a second language.

11. The computer-implemented method according to any of claims 1 to 10, wherein evaluating the input query is based on previous communication and/or the plurality of the applications.

12. The computer-implemented method according to any of claims 1 to 11, wherein the first language model differs from each of the plurality of second language models by: a number of parameters of the model, a dimension of the input of the model, an average number of bitwise operations for processing one input query, an average number of CPU cycles for processing one input query, and/or a number of samples used for training the model.

13. The computer-implemented method according to claim 2 or any of claims 3 to 12, when dependent upon claim 2, wherein evaluating the input query comprises determining that at least one selected application is not available; or
wherein processing the input query comprises determining that at least one selected application is not available.

14. A system comprising at least one processing unit configured to perform the method according to any of the previous claims.

15. A car comprising or forming part of the system of claim 14, and further comprising:
an input system configured to obtain a user input corresponding to an input query;
at least one element controllable by the system in response to an input query.
